# EUROPÄISCHE PATENTSCHRIFT

(11) **EP 3 083 454 B1**
(45) Veröffentlichungstag und Bekanntmachung des Hinweises auf die Patenterteilung: **03.07.2019**
(21) Anmeldenummer: 13814091.8
(22) Anmeldetag: 17.12.2013
(51) Int. Cl.: B65G 1/02, A47B 57/10, B65D 19/00

(54) **LAGERGUT-TRÄGER FÜR EIN LAGERLIFTSYSTEM**
STORED GOODS CARRIER FOR A STORAGE LIFT SYSTEM
SUPPORT DE MARCHANDISES À ENTREPOSER POUR SYSTÈME DE MONTE-CHARGE

(43) Veröffentlichungstag der Anmeldung: 26.10.2016
(73) Patentinhaber: SSI Schäfer AG, 8213 Neunkirch (CH)
(72) Erfinder: KELLER, Silvan, CH-9543 St. Margarethen (TG) (CH)
(74) Vertreter: Witte, Weller & Partner Patentanwälte mbB
(86) Internationale Anmeldenummer: PCT/EP2013/076948
(87) Internationale Veröffentlichungsnummer: WO 2015/090369

(56) Entgegenhaltungen:
- DE-A1- 3 505 500
- DE-U1-202006 018 793
- US-A1- 2005 132 937

## Beschreibung

Die vorliegende Erfindung betrifft einen Lagergut-Träger mit einem modular aufgebauten (Träger-)Rahmen, der aus Holmelementen, Seitenelementen und Eckelementen gebildet ist. Die Erfindung betrifft ferner ein Lagerliftsystem mit derartigen Lagergut-Trägern.

Ein Lagerlift bzw. ein Lagerliftsystem ist eine schrankförmige Lagerregalvorrichtung, die üblicherweise zwei benachbart und beabstandet zueinander angeordnete Regalspalten aufweist, zwischen denen ein Lastaufnahmemittel vertikal verfahrbar ist, um die Lagergut-Träger in einer vorbestimmten Höhe horizontal ein- oder auszulagern. Üblicherweise weisen die Regalspalten eine Vielzahl von seitlich angeordneten Auflagewinkeln auf, die nach einem vorgegebenen Rastermaß in der vertikalen Richtung zueinander beabstandet sind, um die Träger schubladenartig aufzunehmen. Meist am Fuße des Lagerlifts ist eine Bedienöffnung vorgesehen, um die Träger neu mit Gegenständen zu bestücken oder zu entleeren, insbesondere zum Zwecke einer Kommissionierung. Weitere Bedienöffnungen können vorgesehen werden. Das Bestücken und das Entleeren erfolgt üblicherweise manuell. Im Bereich der Bedienöffnung, die sich im Bereich von einer der beiden Regalspalten befindet, können keine Träger gepuffert werden. Ein derartiger Lagerlift ist in dem Dokument DE 20 2006 018 793 U1 offenbart.

Das Dokument DE 20 2006 018 793 U1 offenbart ferner einen Lagergut-Träger nach dem Oberbegriff des Anspruchs 1, mit einem umlaufenden, in sich geschlossenen Rahmen, in welchen mehrere Bodenelemente nebeneinander eingelegt sind. Der Rahmen weist Z-förmige Längsholme und Z-förmige Seitenwangen auf, die über L-förmige Winkelverbindungselemente miteinander verbunden werden. Die Winkelverbindungselemente werden mit ihren Schenkeln außen flächig anliegend an den Längsholmen und den Seitenwangen befestigt, um diese starr miteinander zu verbinden. In ein Inneres des Rahmens werden dann die Bodenelemente eingelegt und dauerhaft, zum Beispiel mittels Nietverbindungen, mit den Längsholmen und den Seitenwangen verbunden, um den so gebildeten Träger verwindungssteif auszugestalten.

Durch die dauerhafte Verbindung der Bodenelemente mit dem Rahmen kann der Träger hinsichtlich seiner Funktion bzw. seines Einsatzzweckes nicht geändert werden. Der Boden kann nicht ohne weiteres ausgetauscht werden. Der Rahmen ist ohne die Bodenelemente nicht in sich verwindungssteif. Ein Zusammenbau des Rahmens gestaltet sich schwierig, weil die Winkelverbindungselemente an schwer zugänglichen Stellen mit den Längsholmen und den Seitenwangen zu verbinden sind.

Es ist daher eine Aufgabe der vorliegenden Erfindung, einen Lagergut-Träger vorzusehen, der die oben erwähnten Nachteile vermeidet. Der Lagergut-Träger soll insbesondere mit einem baukastenartig aufgebauten modularen Rahmen ausgestattet sein, der auch ohne Bodenelemente in sich verwindungssteif ist. Vorzugsweise soll der Rahmen in diesem Zusammenhang in einer Leichtbauweise ausgebildet sein. Ferner ist es wünschenswert, wenn der Rahmen einfach und unkompliziert zusammengebaut werden kann. Insbesondere wäre es von Vorteil, wenn der Boden des Trägers jederzeit ausgetauscht werden kann, um den Träger einer anderen Funktion zuzuführen.

Bei den Trägern ist die lastbedingte Durchbiegung der Holme sowie ein Verdrehen oder Verwinden derselben zu minimieren, da für die maximal Durchbiegung des Trägers bei maximal zulässiger Beladung im Lagerlift in vertikaler Richtung Y zwischen den Trägern Freiräume (Abstände) einzuhalten sind, die ein Nutzvolumen des Lagerlifts verkleinern und die somit nachteilig sind.

Diese Aufgabe wird durch den Lagergut-Träger nach Anspruch 1 gelöst.

Die langen Holmelemente des Trägerrahmens sind als Hohlprofile ausgebildet, um die Eckelemente formschlüssig in ihrem Inneren aufzunehmen. Die formschlüssige Aufnahme der Eckelemente erhöht die Torsionssteifigkeit der Ecke und vermindert so eine lastbedingte Verdrehung der langen Holmelemente, so dass die Materialstärken bei den Holmelementen geringer gewählt werden können. Dies unterstützt eine Leichtbauweise. Ferner ist die Montage des Eckelements - und somit auch des Seitenelements - einfacher. Das Eckelement wird in das Holmelement eingeführt und anschließend mit dem Holmelement und dem Seitenelement (dauerhaft) verbunden. Der Formschluss resultiert in einer Führung beim Einführen und einer gewünschten Ausrichtung bei der Montage.

Außerdem unterstützt die Struktur des Rahmens eine modulare Bauweise. Die Seitenelemente können immer gleich ausgebildet sein, wohingegen die Holmelemente insbesondere in der Höhe variieren können. Mit der variierenden Höhe der Holmelemente variieren auch die Eckelemente, aber nur hinsichtlich ihrer Höhe. Die restlichen Merkmale bleiben jedoch gleich, insbesondere der Ort der Verbindung der Holmelemente mit den Seitenelementen mittels des zweiten Schenkels des Eckelements.

Vorzugsweise weist jedes der Holmelemente ein erstes Profil und ein zweites Profil auf, die formschlüssig ineinander angeordnet sind, wobei zumindest eines der Profile einen der Bodenauflageabschnitte aufweist.

Die mehrteilige Ausgestaltung des Hohlprofils erleichtert die Herstellung der Holmelemente. Das erste Profil kann zum Beispiel einen C-förmigen Querschnitt aufweisen, der mit einem zum Beispiel Z-förmigen Querschnitt des zweiten Profils korrespondiert. Die Profile können allein durch ihre formschlüssige Anordnung ineinander versteift werden, aber dennoch in einer Leichtbauweise ausgeführt sein. Beide Profile können so ausgeführt sein, dass sie Teil des Bodenauflageabschnitts sind und sich gegenseitig beim Halten des Bodens verstärken.

Ferner ist es von Vorteil, wenn die Seitenelemente vorzugsweise jeweils zwischen den Holmelementen und den Eckelementen angeordnet sind.

Die Eckelemente müssen nicht vollständig innerhalb der Hohlprofile sitzen. Zur Erzielung des Versteifungseffekts reicht es aus, wenn der erste Schenkel formschlüssig im Hohlprofil sitzt. Außerdem lässt sich so eine Mitnehmertasche bilden. Vorzugsweise sind die Seitenelemente jeweils zwischen den Holmelementen und den Eckelementen angeordnet, was in einer besonders guten Kraftübertragung resultiert. Auch die Steifigkeit wird erhöht. Die Montage der Rahmenkomponenten vereinfacht sich, insbesondere, wenn die Verbindungsstelle(n) außerhalb des Hohlprofils liegt bzw. liegen.

Bei einer weiteren bevorzugten Ausführungsform weist jedes der Eckelemente einen dritten Schenkel auf, der senkrecht zum ersten Schenkel orientiert ist und parallel beabstandet zum zweiten Schenkel angeordnet ist.

Die Eckelemente weisen also einen C- oder U-förmigen Querschnitt auf, wobei der zweite Schenkel und der dritte Schenkel einen Raum zwischen sich definieren, der als Mitnehmertasche für Mitnehmernocken eines Lastaufnahmemittels des Lagerliftes verwendbar ist.

Insbesondere steht jeweils der dritte Schenkel mit dem äußeren der Profile, vorzugsweise flächig, in Kontakt und der zweite Schenkel ist, vorzugsweise flächig, mit dem inneren der Profile verbunden.

Ferner ist es bevorzugt, wenn der zweite Schenkel und der dritte Schenkel in einem zusammengebauten Zustand des Trägers aus dem jeweiligen Hohlprofil zumindest teilweise hervorstehen.

Auch diese Maßnahme erleichtert die Mitnahme des Trägers durch ein Lastaufnahmemittel, insbesondere durch einen Nockenmitnehmer, der zum Beispiel auf einer umlaufenden Kette des Lastaufnahmemittels angeordnet sein kann. Die Eckelemente haben dann zwei Funktionen, nämlich Verbinden und Mitnahme.

Außerdem ist es bevorzugt, wenn die Holmelemente und die Seitenelemente mit den jeweiligen Schenkeln dauerhaft verbunden, vorzugsweise vernietet, verschraubt oder verschweißt, sind.

Die dauerhafte Verbindung erhöht die Verwindungssteifigkeit des Trägers und unterstützt eine gleichmäßige Verteilung des Kraftflusses innerhalb des Rahmens.

Auch ist es bevorzugt, wenn stirnseitige Enden der Hohlprofile offen sind.

Dies erleichtert das Einführen der Eckelemente von außen, das bedeutet die Montage vereinfacht sich.

Bei einer weiteren Ausgestaltung weist jedes der Hohlprofile einen rechteckigen Querschnitt senkrecht zur Längsrichtung auf, in welchem der jeweilige erste Schenkel formschlüssig sitzt.

Insbesondere umfasst der Träger ferner einen Boden, der vorzugsweise formschlüssig in den Rahmen eingelegt ist und auf den Bodenauflageabschnitten aufliegt.

Schließlich wird die Aufgabe durch ein Lagerliftsystem mit einem erfindungsgemäßen Lagergut-Träger gelöst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1A: eine perspektivische Ansicht eines Lagergut-Trägers der Erfindung ohne Boden;
- Figur 1B: eine perspektivische Ansicht des Trägers der Figur 1A mit einem Gitterboden;
- Figur 1C: eine perspektivische Ansicht des Trägers der Figur 1A, der mit Behältern bestückt ist;
- Figur 2: eine Explosionsansicht eines rechten Teils des Trägers der Figur 1A;
- Figur 3A: eine perspektivische Ansicht eines Eckelements mittlerer Höhe,
- Figur 3B: eine Seitenansicht des Eckelements der Figur 3A in einem verbauten Zustand;
- Figur 4A: eine perspektivische Ansicht eines Eckelements großer Höhe;
- Figur 4B: eine Seitenansicht des Eckelements der Figur 4A in einem verbauten Zustand;
- Figur 5: eine stark schematisierte Schnittansicht eines Holmelements, das mittels einer Nietenverbindung mit einem Seitenelement und einem formschlüssigen Eckelement verbunden ist, in einem verbauten Zustand;
- Figur 6: eine perspektivische Ansicht eines Trägers mit einer Bodenverstärkung;
- Figur 7: eine perspektivische Ansicht eines Trägers mit einer anderen Bodenverstärkung; und
- Figur 8: eine perspektivische Ansicht eines Lagerliftsystems.

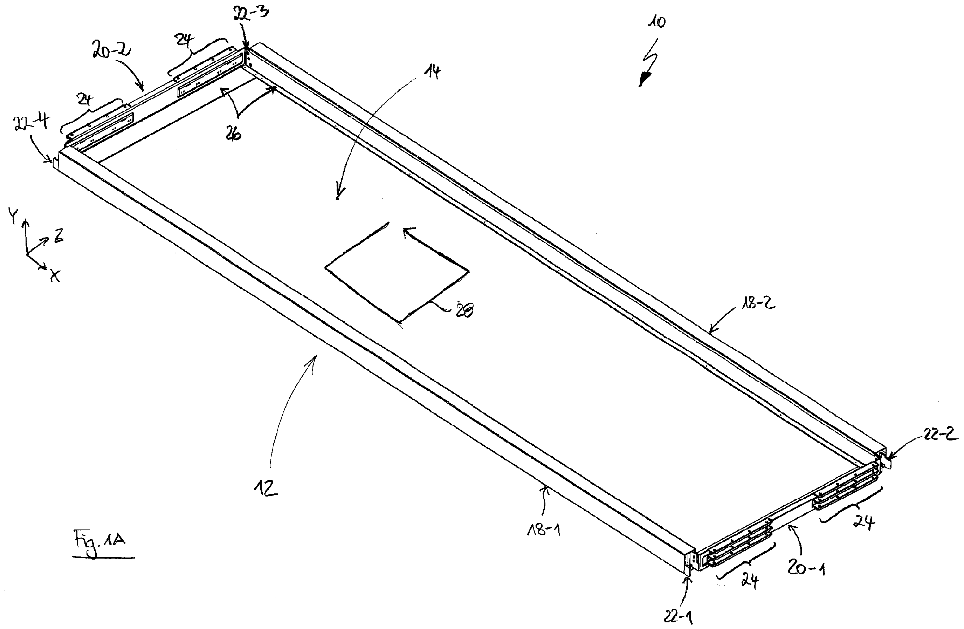

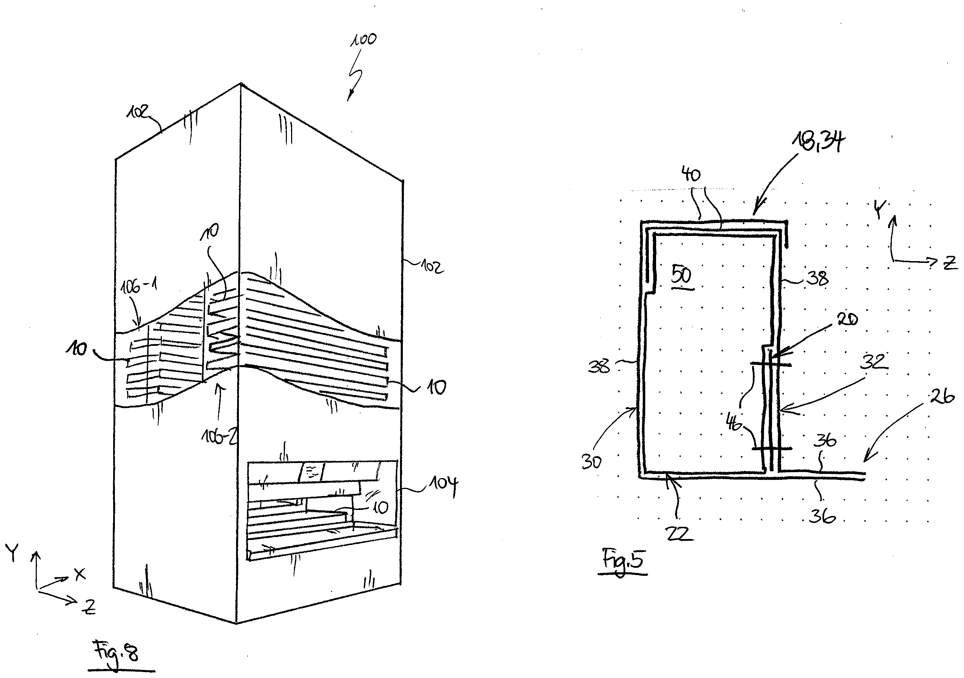

Unter gemeinsamer Bezugnahme auf die Fig. 1A bis 1C werden Lagergut-Träger 10, die nachfolgend auch kurz als Träger 10 bezeichnet werden, in verschiedenen Abwandlungen des Trägers 10 erläutert werden, die zum Einsatz in einem Lagerliftsystem 100 (nachfolgend kurz auch nur als Lagerlift 100 bezeichnet) eingerichtet sind, wie es exemplarisch in der Fig. 8 gezeigt ist.

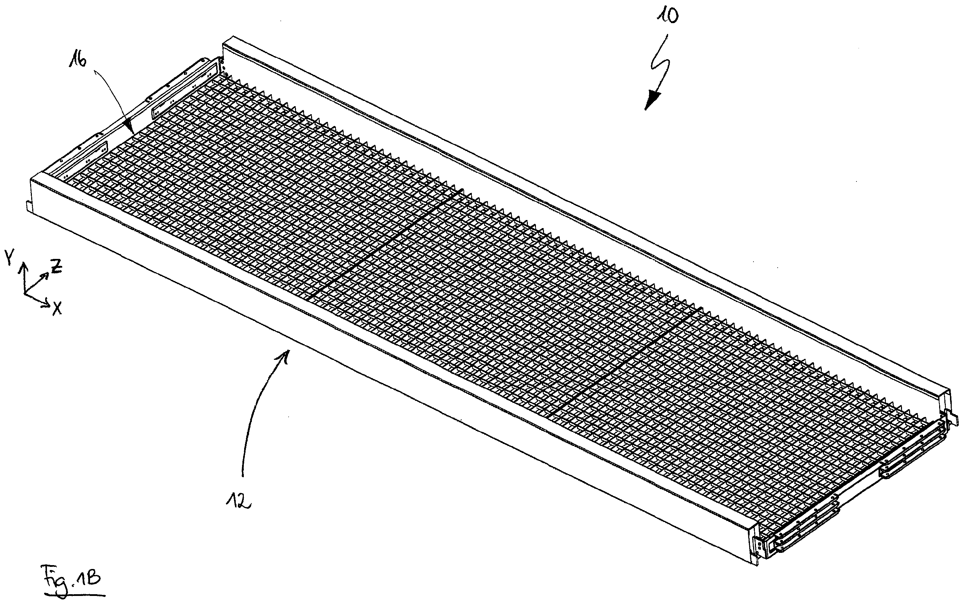

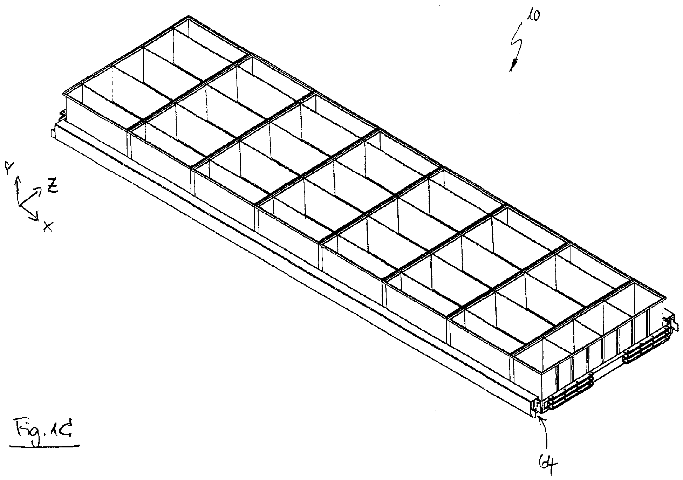

Fig. 1A zeigt eine perspektivische Ansicht eines bodenlosen Trägers 10, der einen (Träger-)Rahmen 12 aufweist, in dessen Inneres 14 ein exemplarisch in der Fig. 1B gezeigter (Gitter-)Boden 16 vorzugsweise formschlüssig einlegbar ist. Fig. 1C zeigt einen mit Behältern bestückten Träger. Eine Tiefe der Behälter ist dabei vorzugsweise so gewählt, dass die Behälter jeweils auf Bodenauflageabschnitten von Holmelementen aufliegen und ein zusätzlicher Trägerboden nicht erforderlich ist. Der Rahmen 12 der Fig. 1A weist Holmelemente 18 und Seitenelemente 20 auf. Die Holmelemente 18 erstrecken sich entlang einer Längsrichtung X. Die Seitenelemente 20 erstrecken sich entlang einer Querrichtung Z, die senkrecht zur Längsrichtung X orientiert ist. Eine Höhenrichtung ist mit Y bezeichnet. Die Richtungen X, Y, Z bilden ein kartesisches Koordinatensystem. Der Rahmen 12 weist ferner Eckelemente 22 auf, die die Holmelemente 18 mit den Seitenelementen 20 verbinden.

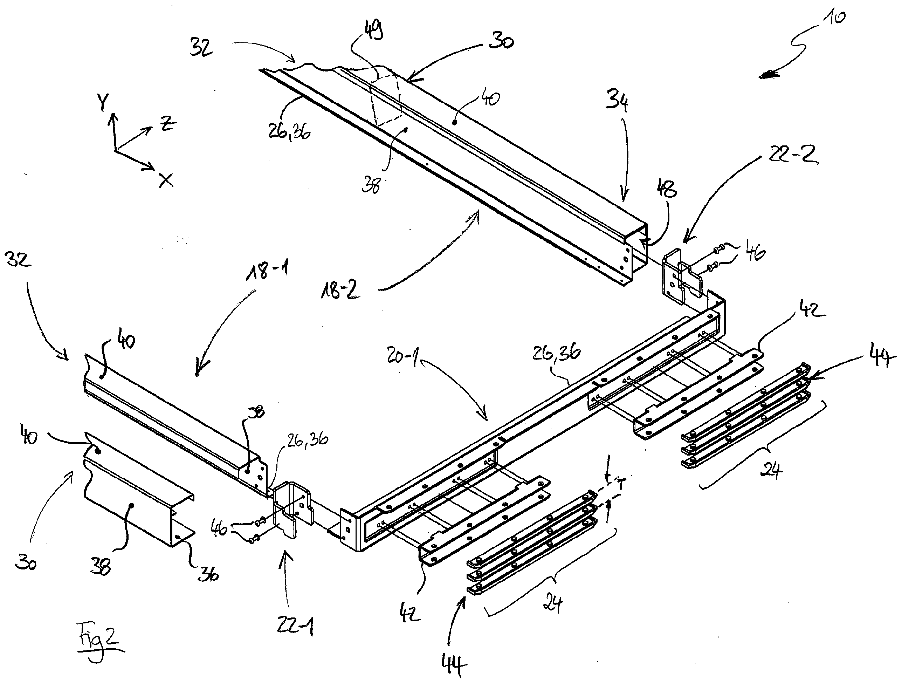

In der Fig. 1A sind zwei Holmelemente 18-1 und 18-2 gezeigt, die parallel zueinander orientiert sind. Ferner sind in der Fig. 1A zwei Seitenelemente 20-1 und 20-2 gezeigt, die ebenfalls parallel orientiert sind. Die Holmelemente 18-1 und 18-2 werden über vier Eckelemente 22-1 bis 22-4 miteinander verbunden, wie es unter Bezugnahme auf Fig. 2 noch näher erläutert werden wird.

Sowohl die Holmelemente 18 als auch die Seitenelemente 20 weisen in Bereichen, die in das Innere 14 gerichtet sind, jeweils einen Bodenauflageabschnitt 26 auf. In der Fig. 1A sind die Bodenauflageabschnitte 26 vorzugsweise durchgängig entlang den Holmelementen 18 und den Seitenelementen 20 ausgebildet, um den Boden 16 (vgl. Fig. 1B) entlang eines gesamten Umfangs zu stützen und zu halten. Die Bodenauflageabschnitte werden durch Teile der Holmelemente 18 und der Seitenelemente 20 gebildet, die in das Innere 14 des Rahmens 12 auskragend ausgebildet sind. Die Bodenauflageabschnitte 26 sind vorzugsweise in einem unteren Bereich des Rahmens 12 angeordnet.

Die Seitenelemente 20 weisen ein oder mehrere Regalauflageabschnitte 24 auf, um in Regelspalten im Lagerliftsystem 100 in nicht näher bezeichnete Regalfächer auf Auflagewinkeln abgesetzt zu werden.

Der Rahmen 12 ist in einer Umfangsrichtung 28 in sich geschlossen, die in der Fig. 1A verdeutlicht ist. Die Umfangsrichtung 28 liegt hier in der horizontalen XZ-Ebene.

Fig. 2 zeigt eine Explosionsdarstellung eines rechten Teils des Rahmens 12, der in der Fig. 1A in der rechten unteren Ecke gezeigt ist. Die Holmelemente 18-1 und 18-2, das Seitenelement 20-1 sowie die Eckelemente 22-1 und 22-2 sind zu erkennen.

Die Holmelemente 18 können ein- oder mehrteilig ausgebildet sein. Vorzugsweise werden die Holmelemente 18 in Form von zwei Profilen 30 und 32 implementiert. Das erste Holmelement 18-1 ist in einem zerlegten Zustand gezeigt. Das zweite Holmelement 18-2 ist in einem zusammengebauten Zustand gezeigt. Jedes der Holmelemente 18-1 und 18-2 weist zum Beispiel ein erstes Profil 30 und ein zweites Profil 32 auf. Die Profile 30 und 32 bilden in dem zusammengebauten Zustand (siehe Holmelement 18-2) ein Hohlprofil 34, das in seinem Inneren hohl ist.

Das erste Profil 30 ist außen angeordnet. Das zweite Profil 32 ist innen angeordnet. Das erste Profil 30 kann einen C-förmigen Querschnitt (senkrecht zur Längsrichtung X) aufweisen. Das zweite Profil 32 kann einen im Wesentlichen Z-förmigen Querschnitt (senkrecht zur Längsrichtung X) aufweisen. Die Querschnitte der Profile 30 und 32 sind formschlüssig aneinander angepasst, wie es unter Bezugnahme auf Fig. 5 noch näher erläutert werden wird. Die Querschnitte der Profile 30 und 32 sind so gewählt, dass die Profile 30 und 32 formschlüssig ineinander passen und das in sich geschlossene Hohlprofil 34 bilden. Das Hohlprofil 34 ist nach allen Seiten geschlossen, das heißt insbesondere nach innen, außen, oben und unten. Stirnseitige Enden 48 der Holmelemente 18 sind vorzugsweise offen, um die Eckelemente 22 (formschlüssig) in das Innere der Hohlprofile 34 von außen in der Längsrichtung X einführen zu können. Wie oben bereits erwähnt, versteht es sich, dass die Holmelemente 18 auch jeweils als einstückige Hohlprofile 34 ausgebildet sein können.

Die zweiten inneren Profile 32 umfassen die nach innen gerichteten Bodenauflageabschnitte 26. Die Bodenauflageabschnitte 26 werden durch einen nach innen gerichteten unteren horizontalen Schenkel des Z-förmigen zweiten Profils 32 gebildet. Die Bodenauflageabschnitte 26 der Profile der Holme sind in einer bevorzugten Ausführung z.B. durch Punktschweißungen oder Niete miteinander verbunden. Diese Bodenauflageabschnitte 26 sind gleichzeitig Teil einer horizontalen Bodenwand 36 des Hohlprofils 34. Das Hohlprofil 34 weist neben der Bodenwand 36 Seitenwände 38 und eine Deckelwand 40 auf. Die Seitenwände 38 sind vertikal orientiert und in horizontaler Richtung (Querrichtung Z) zueinander beabstandet. Die Deckelwand 40 ist parallel zur Bodenwand 36 angeordnet und horizontal orientiert.

Das Seitenelement 20-1 der Fig. 2 ist vorzugsweise ein einziges Profil mit einem Z-förmigen Querschnitt, wobei ein innerer unterer horizontaler Schenkel den Bodenauflageabschnitten 26 darstellt. An stirnseitigen Enden können hier nicht näher bezeichnete flächige Befestigungsohren vorgesehen sein, die in der XY-Ebene liegen und mit den Seitenwänden 38 der inneren Profile 32 vorzugsweise flächig zu verbinden sind.

Das Seitenelement 20-1 weist exemplarisch zwei horizontale Regalauflageabschnitte 24 auf, in die jeweils durch drei im Abstand einer Teilung T der Regalauflagewinkel vertikal übereinander angeordnete Gleitführungen 44 implementiert sind, die zum Beispiel an einem Steg 42 mit einem U-förmigen Querschnitt befestigbar sind. Die Gleitführungen 44 dienen einem vereinfachten Ein- und Ausschieben des Trägers 10 in der Querrichtung Z beim Ein- und Auslagern in bzw. aus einem Regalfach.

Die Holmelemente 18-1 und 18-2, das Seitenelement 20-1 und die Eckelemente 22-1 und 22-2 werden zum Beispiel mit Nieten 46 dauerhaft miteinander verbunden.

Ferner ist in der Fig. 2 exemplarisch ein Verstärkungselement 49 mit Strichlinien gezeigt, das willkürlich in die Hohlprofile 34 (formschlüssig) eingesetzt werden kann, um eine zusätzliche Verwindungssteifigkeit über die Länge der Holmelemente 18 zu bewirken. Es können ein oder mehrere Verstärkungselemente 49 innerhalb der Holmelemente 18 mit gleichen oder unterschiedlichen Abständen zueinander angeordnet werden. Dies hängt unter anderem von einer Gesamtlänge der Holmelemente 18 bzw. des gesamten tablarförmigen Trägers 10 ab.

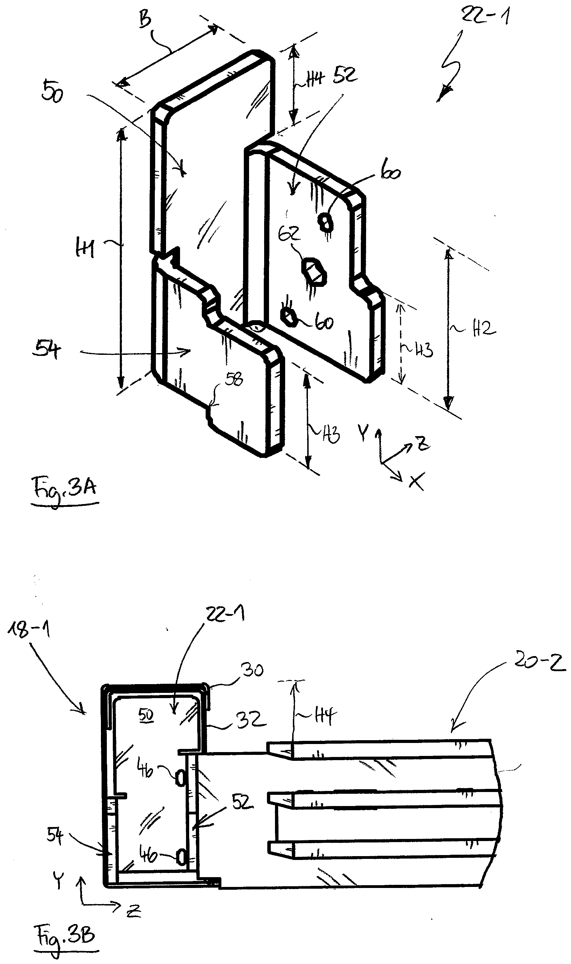

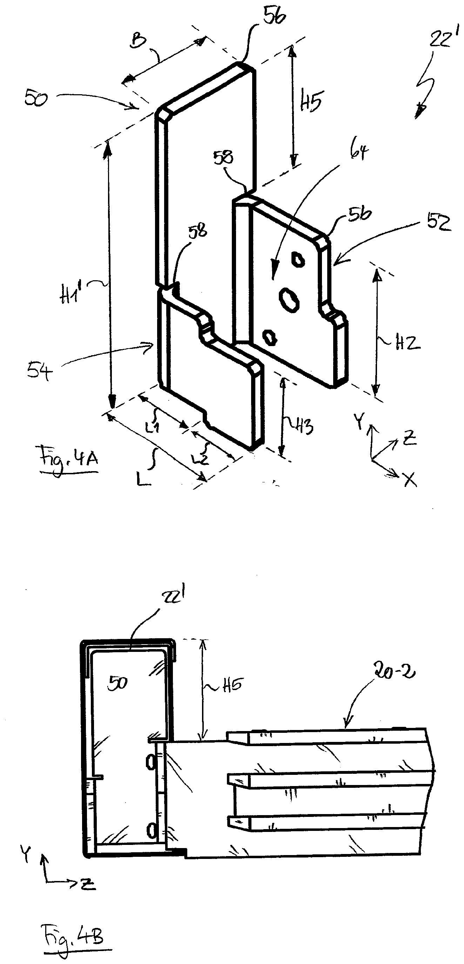

Unter gemeinsamer Bezugnahme auf die Fig. 3A und 3B sowie auf die Fig. 4A und 4B werden nachfolgend ein Aufbau der Eckelemente 22 und ein Einbau der Eckelemente 22 näher erläutert werden. Die Fig. 3A zeigt eine perspektivische Ansicht des Eckelements 22-1 der Fig. 2, wobei es sich um ein Eckelement 22 mittlerer Höhe handelt. Die Fig. 4A zeigt eine perspektivische Ansicht eines Eckelements 22', das sich vom Eckelement 22-1 der Fig. 3A durch seine Gesamthöhe unterscheidet, weil es sich um ein Eckelement großer Höhe handelt. Die restlichen Merkmale sind jedoch gleich, wie es nachfolgend noch näher erläutert werden wird. Die Fig. 3B und 4B zeigen Seitenansichten der eingebauten Eckelemente 22-1 der Fig. 3A und 22' der Fig. 4A.

Allgemein gilt, dass die Eckelemente 22 zumindest einen ersten Schenkel 50 und einen zweiten Schenkel 52 aufweisen. Vorzugsweise ist ferner ein dritter Schenkel 54 vorgesehen. Der erste Schenkel 50 und der zweite Schenkel 52 sind senkrecht zueinander orientiert. Der dritte Schenkel 54 ist senkrecht zum ersten Schenkel 50 orientiert und parallel zum zweiten Schenkel 52 ausgerichtet. Der zweite Schenkel 52 und der dritte Schenkel 54 sind in der Längsrichtung X vorzugsweise gleich lang.

Das Eckelement 22-1 der Fig. 3A weist eine Gesamthöhe H1 auf, die einer Höhe des ersten Schenkels 50 entspricht und die auch im Wesentlichen einer Innenhöhe des Hohlprofils 34 der Fig. 2 entspricht. Der zweite Schenkel 52 hat eine Gesamthöhe H2, wobei ein nach außen kragender Teil des zweiten Schenkels 52 eine geringere Höhe H3 aufweist, die vorzugsweise der Höhe H3 des gegenüberliegenden Schenkels 54 entspricht. Der zweite Schenkel 52 und der dritte Schenkel 54 sind hinsichtlich ihrer Abmessungen vorzugsweise konstant. Lediglich der erste Schenkel 50 ändert sich hinsichtlich seiner Höhe und ggf. seiner Breite B in Abhängigkeit vom inneren Querschnitt des Hohlprofils 34, um formschlüssig in die entsprechenden Hohlprofile 34 eingeführt werden zu können.

Dies erkennt man insbesondere durch einen Vergleich der Fig. 3A und 4A. Die Eckelemente 22-1 (Fig. 3A) und 22' (Fig. 4A) unterscheiden sich lediglich in ihrer Höhe. Die Differenzhöhe H4 zwischen dem ersten Schenkel 50 und dem zweiten Schenkel 52 ist bei dem Eckelement 22-1 der mittleren Höhe geringer als bei dem Eckelement 22' der großen Höhe. H4 ist also kleiner als H5. Das Eckelement 22' der Fig. 4A wird eingesetzt, wenn die Holmelemente 18 höher ausgebildet werden müssen als in Fig. 3.

Die Ecken 56 der Schenkel 50 bis 54 sind vorzugsweise abgerundet ausgebildet, um das Einführen der Eckelemente 22 in die Hohlprofile 34 zu erleichtern. Der zweite Schenkel 52, der flächig mit dem Seitenelement 20 und vorzugsweise dem zweiten Profil 32 verbunden wird, kann eine oder mehrere Öffnungen 60 zur Aufnahme der Nieten 46 aufweisen. Ferner kann eine zusätzliche Öffnung 62 vorgesehen sein, um zum Beispiel eine zusätzliche Fixierungsschraube aufzunehmen (siehe Fig. 3A).

Dies ist gut zu erkennen, wenn man die Seitenansichten der Fig. 3B und 4B miteinander vergleicht. Die Fig. 3B und 4B zeigen die Eckelemente 22-1 bzw. 22' in einem verbauten Zustand.

In Fig. 5 ist eine schematische Darstellung der Verbindung zwischen dem Hohlprofil 34, dem Seitenelement 20 und dem Eckelement 22 mittels einer exemplarischen Nietenverbindung gezeigt. Fig. 5 dient im Wesentlichen zur Veranschaulichung des Formschlusses zwischen den beteiligten Komponenten 30, 32, 20 und 22. Insbesondere der erste Schenkel 50 ist hinsichtlich seiner Kontur an den inneren Hohlraum des Hohlprofils 34 angepasst. Selbstverständlich darf zwischen den Komponenten ein kleines Spiel vorhanden sein, das unter anderem auf Herstellungstoleranzen zurückzuführen ist. Das Spiel darf in einem unteren Bereich (vgl. auch Fig. 3B und 4B) des ersten Schenkels 50 des Eckelements 22 größer sein als in einem oberen Bereich. Der erste Schenkel 50 des Eckelements 22 sollte aber vorzugsweise über nahezu die gesamte Höhe in der Querrichtung Z einen Formschluss bewirken, um die gewünschte Verwindungssteifigkeit des Holmelements 18 zu gewährleisten.

Die in der Fig. 2 beim zweiten Holmelement 18-2 gezeigten Verstärkungselemente 49 weisen im Wesentlichen einen gleichen Querschnitt wie der erste Schenkel 50 des entsprechenden Eckelements 22 auf, um die Verwindungssteifigkeit über die gesamte Länge der Holmelement 18 zu verstärken.

Der Raum zwischen dem zweiten Schenkel 52 und dem dritten Schenkel 54 dient als Mitnehmertasche 64 (Fig. 4) für hier nicht näher gezeigte Mitnehmernocken eines Lastaufnahmemittels des Lagerliftsystems 100, um die Träger 10 in der horizontalen Querrichtung Z zu bewegen. Die Mitnehmertasche 64 ist so dimensioniert, dass sie den hier nicht dargestellten Nocken sicher aufnehmen kann. Die Mitnehmertasche 64 ist in der Fig. 1C nochmals gezeigt. Ein Teil des dritten Schenkels 54, der die Länge L2 aufweist, ragt im verbauten Zustand aus dem offenen Ende 48 des Holmelements 18 heraus, wobei der restliche Teil mit der Länge L1 innerhalb des Holmelements 18 sitzt. Der dritte Schenkel 54 steht flächig mit dem ersten Profil 30 in Kontakt. Der zweite Schenkel 52 ist flächig mit einem der anderen Elemente 20 und/oder 32 (fest) verbunden, je nachdem welches der Elemente in der Mitte sitzt. In der Fig. 5 sitzt das Seitenelemente 20 in der Mitte.

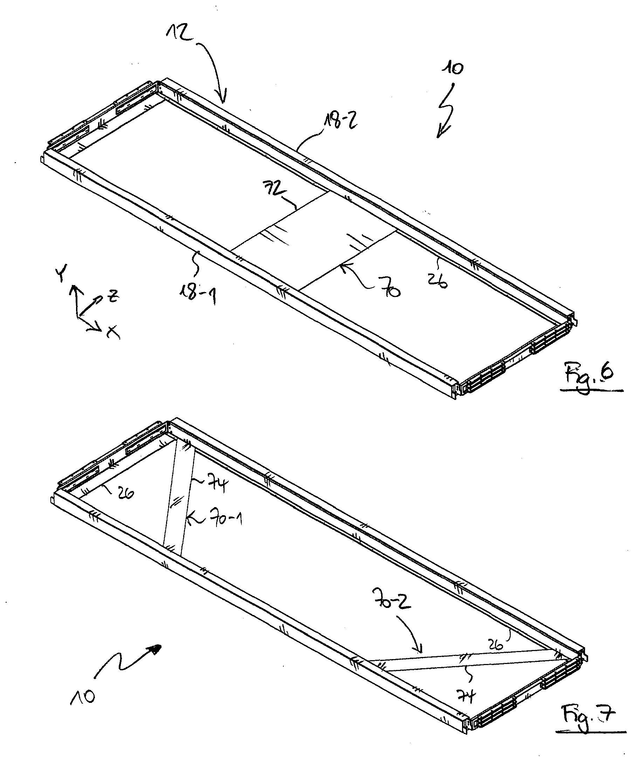

Fig. 6 zeigt eine perspektivische Ansicht einer anderen Variante eines Trägers 10, der mit Ausnahme eines zusätzlichen Versteifungselements 70 genauso wie der Träger 10 der Fig. 1A ausgebildet ist. Der Träger 10 der Fig. 6 weist zusätzlich ein sich entlang der Querrichtung Z erstreckendes, mittig angeordnetes Versteifungselement 70 auf, das hier zum Beispiel in Form einer (Blech-)Tafel 72 realisiert ist. Die Blechtafel 72 ist an den Holmelementen 18-1 und 18-2 fixiert. Die Blechtafel 72 kann geeignete Flächenprägungen oder Kantungen aufweisen, um ihre Fläche zu versteifen, woraus auch eine Versteifung einer Gesamtträgerfläche resultiert.

Fig. 7 zeigt eine weitere mögliche Ausgestaltung des Trägers 10, ähnlich dem Träger der Fig. 6. Bei dem Träger 10 der Fig. 7 sind zwei diagonale Versteifungselemente 70-1 und 70-2 im äußeren Randbereich des Rahmens 12 gezeigt. Hierbei kann es sich um an den Holmelementen 18-1 und 18-2 fixierte (Blech-)Streifen 74 handeln. Die Streifen 74 können durch geeignete Flächenprägungen oder Kantungen versteift werden, wodurch der gesamte Träger 10 steifer wird.

Versteifungen, wie in Fig. 6 und Fig. 7 dargestellt, dienen der Erhöhung der Verwindungssteifigkeit in der XZ-Ebene des Trägers 10 und vermindern außerdem die lastbedingte Torsion der Holme, wenn Bodenelemente im Wesentlichen formschlüssig, jedoch mit fertigungsbedingtem Spiel lediglich lose eingelegt werden.

Fig. 8 zeigt eine perspektivische Ansicht eines Lagerliftsystems 100, das schrankartig ausgebildet ist. Der Lagerlift 100 ist teilweise transparent dargestellt, um die zuvor beschriebenen Träger 10 in einem eingelagerten Zustand zu zeigen. Der Lagerlift weist üblicherweise Wände 102 auf. Eine der Wände 102 hat meist in ihrem unteren Bereich eine Öffnung 104, die als Bedienöffnung ein Andienen und Abholen der Träger 10 durch ein hier nicht dargestelltes Lastaufnahmemittel ermöglicht, welches zwischen zwei Regalspalten 106-1 und 106-2 höhenverstellbar beweglich ist. Die Auflagewinkel der Regelfächer sind in der Fig. 8 nicht dargestellt.

In der obenstehenden Beschreibung der Figuren hat man sich bei der Wahl der Orientierung des Koordinatensystems generell an die in der Intralogistik üblichen Bezeichnungen gehalten, so dass die Längsrichtung mit X, die Höhe mit Y und die Querrichtung mit Z bezeichnet sind.

Des Weiteren wurden gleiche Teile und Merkmale mit gleichen Bezugszeichen versehen. Die in der Beschreibung enthaltenen Offenbarungen sind sinngemäß auf ähnliche Teile und Merkmale mit ähnlichen Bezugszeichen übertragbar. Lage- und Orientierungsangaben (zum Beispiel "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

**Bezugszeichen**

| | | | |
|---|---|---|---|
| 10 | (Lagergut-)Träger | B | Breite von 22 |
| 12 | Rahmen | 56 | Ecken von 50 - 54 |
| 14 | Inneres von 12 | 58 | Einschnitt |
| 16 | Boden | L | Länge von 22 bzw. 54 |
| 18 | Holmelement | L1 | Eindringtiefe |
| 20 | Seitenelement | L2 | Überstand in X |
| 22 | Eckelement | 58 | Stufe in 54 (optional) |
| 24 | Regalauflageabschnitt | 60 | Öffnung in 52 für 46 |
| 26 | Bodenauflageabschnitt | 62 | zusätzliche Öffnung |
| 28 | Umfangsrichtung | 64 | Mitnehmertasche |
| 30 | 1. Profil von 18, außen | 70 | Versteifungselement |
| 32 | 2. Profil von 18, innen | 72 | (Blech-)Tafel |
| 34 | Hohlprofil = Kombi aus 30+32 | 74 | (Blech-)Streifen |
| 36 | Bodenwand | 100 | Lagerlift(system) |
| 38 | Seitenwand | 102 | Wände |
| 40 | Deckelwand | 104 | Öffnung |
| 42 | Steg | 106 | Regalspalte |
| 44 | Gleitführungen | | |
| T | Teilung | | |
| 46 | Nieten | | |
| 48 | offene stirnseitige Enden | | |
| 49 | Verstärkungselement | | |
| 50 | 1. Schenkel von 22 | | |
| 52 | 2. Schenkel von 22 | | |
| 54 | 3. Schenkel von 22 | | |
| H1 | Höhe von 50 | | |
| H2 | Höhe von 52 | | |
| H3 | Höhe von 54 | | |
| H4 | Überstand von 50 | | |
| H5 | Überstand von 50 | | |

## Patentansprüche

1. Lagergut-Träger (10) für ein Lagerliftsystem (100) mit einer Bedienöffnung (104), einer Vielzahl von Regalfächern zur Lagerung des Trägers (10) und einem höhenverstellbaren Lastaufnahmemittel zum Ein- und Auslagern des Trägers (10) in und aus den Regalfächern; wobei der Träger (10) einen Rahmen (12) zum Halten eines Bodens (16) aufweist; wobei der Rahmen (10) Holmelemente (18), Seitenelemente (20) und Eckelemente (22) aufweist; wobei die Holmelemente (18) über die Eckelemente (22) mit den Seitenelementen (20) verbunden sind, so dass der Rahmen (12) umfänglich in sich geschlossen ist; wobei die Holmelemente (18) und die Seitenelemente (20) nach innen gerichtete horizontale Bodenauflageabschnitte (26) aufweisen, so dass der Boden (16) in ein Inneres (14) des Rahmens (12) eingelegt wird; wobei sich die Holmelemente (18) entlang einer Längsrichtung (X) erstrecken und sich die Seitenelemente (20) senkrecht zu den Holmelementen (18) entlang einer Querrichtung (Z) des Trägers (10) erstrecken; wobei die Seitenelemente (20) horizontale Regalauflageabschnitte (24) aufweisen, um den Träger (10) in einem der Regalfächer abzusetzen; und wobei jedes der Eckelemente (22) mit zumindest einem ersten Schenkel (50) und einem senkrecht zum ersten Schenkel (50) angeordneten zweiten Schenkel (52) ausgebildet ist; wobei der zweite Schenkel (52) mit einem der Seitenelemente (20) und vorzugsweise einem der Holmelemente (18) verbunden ist; **dadurch gekennzeichnet, dass** jedes der Holmelemente (18) ein um die Längsrichtung (X) umlaufendes, in sich geschlossenes Hohlprofil (34) ist; und wobei der erste Schenkel (50) so ausgebildet ist, dass er im Wesentlichen formschlüssig in das Hohlprofil (34) eingesteckt wird.

2. Lagergut-Träger (10) nach Anspruch 1, **dadurch gekennzeichnet, dass** jedes der Hohlprofile (34) ein erstes Profil (30) und ein zweites Profil (32) aufweist, die formschlüssig ineinander angeordnet sind, wobei zumindest eines der Profile (32) einen der Bodenauflageabschnitte (26) aufweist.

3. Lagergut-Träger (10) nach Anspruch 1 oder 2, **dadurch gekennzeichnet, dass** die ersten Schenkel (50) der Eckelemente (22) innerhalb der Hohlprofile (34) angeordnet sind, und wobei die Seitenelemente (20) vorzugsweise jeweils zwischen den Holmelementen (18) und den Eckelementen (22) angeordnet sind.

4. Lagergut-Träger (10) nach einem der Ansprüche 1 bis 3, **dadurch gekennzeichnet, dass** jedes der Eckelemente (22) einen dritten Schenkel (54) aufweist, der senkrecht zum ersten Schenkel (50) und parallel beabstandet zum zweiten Schenkel (52) orientiert ist.

5. Lagergut-Träger (10) nach Anspruch 4, **dadurch gekennzeichnet, dass** jeweils der dritte Schenkel (54) mit einem äußeren der Profile (30), vorzugsweise flächig, in Kontakt steht und der zweite Schenkel (52), vorzugsweise flächig, mit einem inneren der Profile (30) verbunden ist.

6. Lagergut-Träger (10) nach Anspruch 4 oder 5, **dadurch gekennzeichnet, dass** der zweite Schenkel (52) und der dritte Schenkel (54) in einem zusammengebauten Zustand des Trägers (10) aus dem jeweiligen Hohlprofil (34) zumindest teilweise hervorstehen.

7. Lagergut-Träger (10) nach einem der Ansprüche 1 bis 6, **dadurch gekennzeichnet, dass** die Holmelemente (18) und die Seitenelemente (22) mit den jeweiligen zweiten Schenkeln (52) dauerhaft verbunden, vorzugsweise vernietet, verschraubt oder verschweißt, sind.

8. Lagergut-Träger (10) nach einem der Ansprüche 1 bis 7, **dadurch gekennzeichnet, dass** stirnseitige Enden (48) der Hohlprofile (34) offen sind.

9. Lagergut-Träger (10) nach einem der Ansprüche 1 bis 8, **dadurch gekennzeichnet, dass** jedes der Hohlprofile (34) einen rechteckigen Querschnitt senkrecht zur Längsrichtung (X) aufweist, in welchem der jeweilige erste Schenkel (50) formschlüssig sitzt.

10. Lagergut-Träger (10) nach einem der Ansprüche 1 bis 9, **dadurch gekennzeichnet, dass** ferner den Boden (16) umfasst, der, vorzugsweise formschlüssig, in den Rahmen (12) eingelegt ist und auf den Bodenauflageabschnitte (26) aufliegt.

11. Lagerliftsystem (100) mit einer Vielzahl von Lagergut-Trägern (10) nach einem der Ansprüche 1 bis 10.

## Claims

1. A storage-goods carrier (10) for a storage-lift system (100) comprising an operating opening (104), a plurality of rack compartments for storing the carrier (10), and a height-adjustable load-handling device for storing and retrieving the carrier (10) in and from the rack compartments; wherein the carrier (10) comprises a frame (12) for supporting a base (16); wherein the frame (10) comprises strut elements (18), side elements (20), and corner elements (22), wherein the strut elements (18) are connected to the side elements (20) through the corner elements (22) so that the frame (12) is closed in itself in a circumferential direction; wherein the strut elements (18) and the side elements (20) comprise horizontal base-support portions (26), which are orientated inwardly, so that the base (16) is put into an interior (14) of the frame (12); wherein the strut elements (18) extend along a longitudinal direction (X) and the side elements (20) extend perpendicularly to the strut elements (18) along a transversal direction (Z) of the carrier (10); wherein the side elements (20) comprise horizontal rack-support portions (24) for inserting the carrier (10) in one of the rack compartments; and wherein each of the corner elements (22) is formed by at least one first leg (50) and a second leg (52) perpendicular to the first leg (50); wherein the second leg (52) is connected to one of the side elements (20) and preferably to one of the strut elements (18); **characterized in that** each of the strut elements (18) is a hollow profile (34) being closed in itself and surrounding the longitudinal direction (X); and wherein the first leg (50) is formed such that it is inserted into the hollow profile (34) substantially in positive engagement.

2. The storage-goods carrier (10) of claim 1, **characterized in that** each of the hollow profiles (34) comprises a first profile (30) and a second profile (32) being arranged in one another in positive engagement; wherein at least one of the profiles (32) comprises one of the base-support portions (26).

3. The storage-goods carrier (10) of claim 1 or 2, **characterized in that** the first legs (50) of the corner elements (22) are arranged within the hollow profiles (34), and wherein the side elements (20) preferably are arranged respectively between the strut elements (18) and the corner elements (22).

4. The storage-goods carrier (10) of any of the claims 1 to 3, **characterized in that** each of the corner elements (22) comprises a third leg (54) perpendicular to the first leg (50) and orientated parallel and distanced to the second leg (52).

5. The storage-goods carrier (10) of claim 4, **characterized in that** respectively the third leg (54) is in contact, preferably two-dimensionally, with an outer one of the profiles (30), and the second leg (52) is connected, preferably two-dimensionally, to an inner one of the profiles (30).

6. The storage-goods carrier (10) of claim 4 or 5, **characterized in that** the second leg (52) and the third leg (54), in an assembled state of the carrier (10), protrude at least partially from the respective hollow profile (34).

7. The storage-goods carrier (10) of any of the claims 1 to 6, **characterized in that** the strut elements (18) and the side elements (22) are permanently connected, preferably riveted, screwed, or welded, to the respective second legs (52).

8. The storage-goods carrier (10) of any of the claims 1 to 7, **characterized in that** face-side ends (48) of the hollow profiles (34) are open.

9. The storage-goods carrier (10) of any of the claims 1 to 8, **characterized in that** each of the hollow profiles (34) comprises a rectangular cross section perpendicular to the longitudinal direction (X), in which the respective first leg (50) sits in positive engagement.

10. The storage-goods carrier (10) of any of the claims 1 to 9, **characterized in** further comprising the base (16) which is inserted, preferably in positive engagement, into the frame (12) and is supported on the base-support portions (26).

11. A storage-lift system (100) comprising a plurality of storage-goods carrier (10) of any of the claims 1 to 10.

## Revendications

1. Support de marchandises à entreposer (10) pour un système de monte-charge (100) avec une ouverture de commande (104), une multiplicité de cases de rayonnage pour l'entreposage du support (10) et un moyen de réception de charge réglable en hauteur pour l'introduction et l'extraction du support (10) dans et hors des cases de rayonnage; dans lequel le support (10) présente un cadre (12) destiné à maintenir un fond (16); dans lequel le cadre (12) présente des éléments de longeron (18), des éléments latéraux (20) et des éléments d'angle (22); dans lequel les éléments de longeron (18) sont assemblés aux éléments latéraux (20) au moyen des éléments d'angle (22), de telle manière que le cadre (12) soit fermé sur lui-même en périphérie; dans lequel les éléments de longeron (18) et les éléments latéraux (20) présentent des parties de pose de fond horizontales (26) orientées vers l'intérieur, de telle manière que le fond puisse être posé dans une région intérieure (14) du cadre (12); dans lequel les éléments de longeron (18) s'étendent le long d'une direction longitudinale (X) et les éléments latéraux (20) s'étendent perpendiculairement aux éléments de longeron (18) le long d'une direction transversale (Z) du support (10); dans lequel les éléments latéraux (20) présentent des parties d'appui de rayonnage horizontales (24), pour déposer le support (10) dans une des cases de rayonnage; et dans lequel chacun des éléments d'angle (22) est formé avec au moins une première branche (50) et une deuxième branche (52) disposée perpendiculairement à la première branche (50); dans lequel la deuxième branche (52) est assemblée à un des éléments latéraux (20) et de préférence à un des éléments de longeron (18), **caractérisé en ce que** chacun des éléments de longeron (18) est un profilé creux fermé sur lui-même (34) entourant la direction longitudinale (X); et dans lequel la première branche (50) est réalisée de telle manière qu'elle soit engagée essentiellement par emboîtement dans le profilé creux (34).

2. Support de marchandises à entreposer (10) selon la revendication 1, **caractérisé en ce que** chacun des profilés creux (34) présente un premier profilé (30) et un second profilé (32), qui sont disposés par emboîtement l'un dans l'autre, dans lequel au moins un des profilés (32) présente une des parties de pose de fond (26).

3. Support de marchandises à entreposer (10) selon une revendication 1 ou 2, **caractérisé en ce que** les premières branches (50) des éléments d'angle (22) sont disposées à l'intérieur des profilés creux (34), et dans lequel les éléments latéraux (20) sont de préférence disposés respectivement entre les éléments de longeron (18) et les éléments d'angle (22).

4. Support de marchandises à entreposer (10) selon l'une quelconque des revendications 1 à 3, **caractérisé en ce que** chacun des éléments d'angle (22) présente une troisième branche (54), qui est orientée perpendiculairement à la première branche (52) et parallèlement à distance de la deuxième branche (52).

5. Support de marchandises à entreposer (10) selon la revendication 4, **caractérisé en ce que** la troisième branche (54) est respectivement en contact, de préférence à plat, avec un extérieur des profilés (30), et la deuxième branche (52) est assemblée, de préférence à plat, à un intérieur des profilés (30).

6. Support de marchandises à entreposer (10) selon une revendication 4 ou 5, **caractérisé en ce que** la deuxième branche (52) et la troisième branche (54) sortent au moins en partie hors du profilé creux respectif (34) dans un état assemblé du support (10).

7. Support de marchandises à entreposer (10) selon l'une quelconque des revendications 1 à 6, **caractérisé en ce que** les éléments de longeron (18) et les éléments latéraux (20) sont assemblés de façon durable, de préférence rivés, vissés ou soudés, aux deuxièmes branches respectives (52).

8. Support de marchandises à entreposer (10) selon l'une quelconque des revendications 1 à 7, **caractérisé en ce que** les extrémités frontales (48) des profilés creux (34) sont ouvertes.

9. Support de marchandises à entreposer (10) selon l'une quelconque des revendications 1 à 8, **caractérisé en ce que** chacun des profilés creux (34) présente une section transversale rectangulaire perpendiculairement à la direction longitudinale (X), dans laquelle la première branche respective (50) est logée par emboîtement.

10. Support de marchandises à entreposer (10) selon l'une quelconque des revendications 1 à 9, **caractérisé en ce qu'**il comprend en outre le fond (16), qui est inséré, de préférence par emboîtement, dans le cadre (12) et qui repose sur les parties de pose de fond (26).

11. Système de monte-charge (100) comportant une multiplicité de supports de marchandises à entreposer (10) selon l'une quelconque des revendications 1 à 10.
